# EUROPEAN PATENT APPLICATION

(11) **EP 4 201 738 A1**
(43) Date of publication of application: **28.06.2023**
(21) Application number: 22208480.8
(22) Date of filing: 21.11.2022
(51) Int. Cl.: B60P 7/13, B61D 45/00

(54) **AUTOMATIC CONTAINER FIXING ON TRAILER**

(30) Priority: 21.12.2021 CN 202123233743 U; 22.04.2022 CN 202220951238 U
(71) Applicant: Beijing Tusen Zhitu Technology Co., Ltd., Beijing 100016 (CN)
(72) Inventor: LIU, Chong, Beijing, 100016 (CN); SUN, Ming, Beijing, 100016 (CN); WANG, Zhibing, Beijing, 100016 (CN); HAO, Jianan, Beijing, 100016 (CN)
(74) Representative: Murgitroyd & Company

(57) **Abstract**

The present disclosure provides a trailer and a vehicle. The trailer comprises: a structural beam; and at least one container protector installed on the structural beam; wherein the container protector comprises a drive member and a protection member, the drive member being adapted to drive the protection member to rise and lower, and the protection member being capable of providing a limiting function for a container on the trailer when raised. The present disclosure may automatically raise the protection member after installing the container on the trailer so that the protection member locks the container; before the container is to be unloaded, the protection member is automatically retracted to release the limiting function for the container. In this way, it is no longer necessary to specially manually tighten or loosen a shackle of a container, realizing the intelligent control of cargo loading and unloading.

## Description

The present disclosure claims priority to Chinese patent application No. 202123233743.8, titled "TRAILER AND VEHICLE", filed on December 21, 2021, and the Chinese patent application No. 202220951238.2, titled "TRAILER AND VEHICLE", filed on April 22, 2022.

### TECHNICAL FIELD

The present disclosure relates to the technical field of vehicles, and more particularly to a trailer and a vehicle.

### BACKGROUND

Currently, automatic driving trucks manually tighten a shackle (also called lock catch) to lock a container after the container is loaded, and manually loosen the shackle before the container is to be unloaded. In this way, it is unavoidable that people need to walk to the trailer to screw the shackle, which cannot achieve remote automatic control and cannot meet the automatic requirements of the full flow of automatic driving vehicles. It is therefore desirable to provide a more intelligent container loading and unloading solution.

### SUMMARY

Embodiments of the present disclosure provide a trailer and a vehicle to address or at least address the above-mentioned problems.

According to one aspect of an embodiment of the present disclosure, there is provided a trailer, comprising: a structural beam; and at least one container protector installed on the structural beam; wherein the container protector comprises a drive member and a protection member, the drive member being adapted to drive the protection member to rise and lower, and the protection member being capable of providing a limiting function for a container on the trailer when raised.

According to one aspect of an embodiment of the present disclosure, there is provided a vehicle, comprising a tractor and the trailer as described above.

According to the technical solutions provided by the present disclosure, the present disclosure may automatically raise the protection member after installing the container on the trailer so that the protection member locks the container; before the container is to be unloaded, the protection member is automatically retracted to release the limiting function for the container. In this way, it is no longer necessary to specially manually tighten or loosen a shackle of a container, realizing the intelligent control of automatic driving vehicles.

### BRIEF DESCRIPTION OF THE DRAWINGS

In order to illustrate the technical solutions of the embodiments of the present disclosure more clearly, the following will briefly introduce the drawings that need to be used in the embodiments of the present disclosure. Obviously, the drawings described below are merely some embodiments of the present disclosure. For those of ordinary skills in the art, other drawings can be obtained according to these drawings without involving inventive efforts.
Fig. 1 is a schematic structural diagram of a vehicle 100 according to one embodiment of the present disclosure.
Fig. 2 is a schematic structural diagram of a trailer 120 according to one embodiment of the present disclosure.
Fig. 3 is a schematic structural diagram of a container protector 122 according to one embodiment of the present disclosure.
Fig. 4 is a schematic structural diagram of a container protector according to another embodiment of the present disclosure.
Fig. 5 is a schematic structural diagram of a trailer 120 according to another embodiment of the present disclosure.

### DETAILED DESCRIPTION

The implementation mode of the present disclosure is described in further detail below with reference to the accompanying drawings and embodiments. The following detailed description of the embodiments and the accompanying drawings are intended to exemplarily illustrate the principles of the disclosure, but are not intended to limit the scope of the disclosure, i.e. the disclosure is not limited to the embodiments described.

In the description of the present disclosure, it needs to be noted that, unless otherwise indicated, the terms "first" and "second" and the like are used for descriptive purposes only and are not to be construed as indicating or implying relative importance; "multiple" means two or more; the orientation or positional relationships indicated by the terms "inner", "outer", "top", "bottom", etc. are based on the orientation or positional relationship shown in the drawings, and are only for the convenience of describing the disclosure and simplifying the description, rather than indicating or implying that the referred device or element must have a specific orientation, or be constructed and operated in a specific orientation, and therefore cannot be construed as a limitation of the present disclosure.

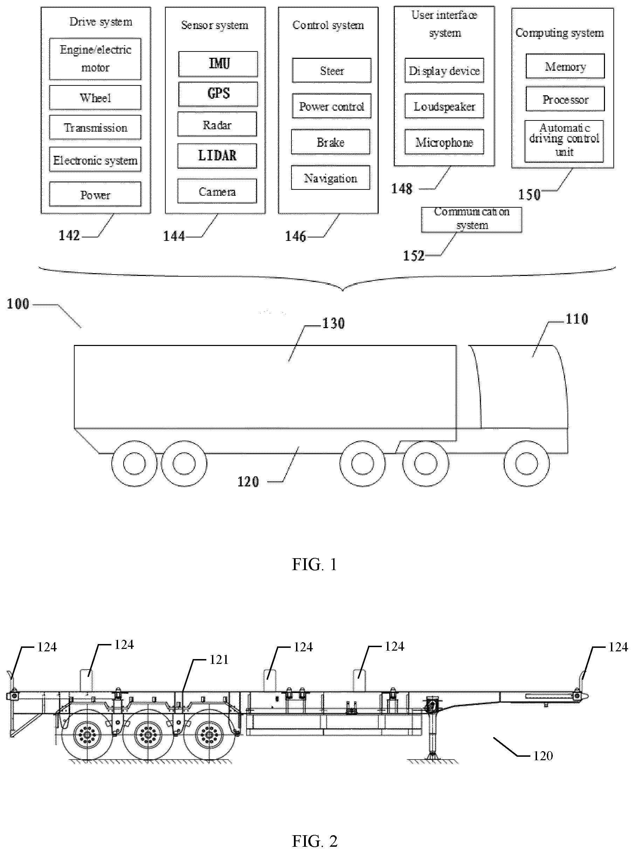

Fig. 1 is a schematic diagram of a vehicle 100 in which various techniques disclosed herein may be implemented. The vehicle 100 may be a car, a truck, a motorcycle, a bus, a boat, an airplane, a helicopter, a lawn mower, an excavator, a snowmobile, an aircraft, a recreational vehicle, an amusement park vehicle, a farm device, a construction device, a tram, a golf cart, a train, a trolley bus, or other vehicles. The vehicle 100 may be fully or partially operated in an automatic driving mode. The vehicle 100 may control itself in the automatic driving mode, e.g. the vehicle 100 may determine the current state of the vehicle and the current state of the environment in which the vehicle is located, determine a predicted behavior of at least one other vehicle in the environment, determine a level of trust corresponding to a possibility that the at least one other vehicle will execute the predicted behavior, and control the vehicle 100 itself based on the determined information. While in the automatic driving mode, the vehicle 100 may operate without human interaction.

The vehicle 100 may include various vehicle systems such as a drive system 142, a sensor system 144, a control system 146, a user interface system 148, a computing system 150, and a communication system 152. The vehicle 100 may include more or fewer systems, each of which may include multiple units. Further, each system and unit of the vehicle 100 may be interconnected. For example, the computing system 150 can be in data communication with one or more of the drive system 142, the sensor system 144, the control system 146, the user interface system 148, and the communication system 152. Therefore, one or more of the described functions of the vehicle 100 may be divided into additional functional or physical components, or combined into a fewer number of functional or physical components. In a further example, additional functional or physical components may be added to the example shown in Fig. 1.

The drive system 142 may include multiple operable components (or units) that provide kinetic energy to the vehicle 100. In one embodiment, the drive system 142 may include an engine or an electric motor, a wheel, a transmission, an electronic system, and a power (or a power source). The engine or electric motor may be any combination of the following devices: an internal combustion engine, an electric motor, a steam engine, a fuel cell engine, a propane engine, or other forms of engines or electric motors. In some embodiments, the engine may convert a power source into mechanical energy. In some embodiments, the drive system 142 may include multiple engines or electric motors. For example, a gasoline-electric hybrid vehicle may include a gasoline engine and electric motor, among other things.

The wheel of the vehicle 100 may be a standard wheel. The wheel of the vehicle 100 may be any of a variety of types of wheels, including one-wheel, two-wheel, three-wheel, or four-wheel types, such as four-wheel on a car or a truck. Other numbers of wheels are also possible, for example, six wheels or more. One or more wheels of the vehicle 100 may be operated in a different direction of rotation from the other wheels. The wheel may be at least one wheel fixedly connected to the transmission. The wheel may comprise a combination of metal and rubber, or a combination of other substances. The transmission may include a unit operable to transmit the mechanical power of the engine to the wheel. For this purpose, the transmission may comprise a gearbox, a clutch, a differential gear, and a transmission shaft. The transmission may also comprise other units. The transmission shaft may include one or more axles matching the wheel. The electronic system may include a unit for transmitting or controlling an electronic signal of the vehicle 100. These electronic signals may be used to activate multiple lights, servo-mechanisms, electric motors, and other electronic driving or control devices in the vehicle 100. The power source may be an energy source that wholly or partially powers the engine or the electric motor. That is, the engine or the electric motor can convert the power source into mechanical energy. Illustratively, the power source may include gasoline, petroleum, petroleum fuels, propane, other compressed gaseous fuels, ethanol, fuel cells, solar panels, batteries, and other electrical energy sources. The power source may additionally or alternatively include any combination of a fuel tank, a battery, a capacitor, or a flywheel. The power source may also provide energy to other systems of the vehicle 100.

The sensor system 144 may include multiple sensors for sensing the information about the environment and conditions of the vehicle 100. For example, the sensor system 144 may include an Inertial Measurement Unit (IMU), a GNSS (Global Navigation Satellite System) transceiver (e.g. a Global Positioning System (GPS) transceiver), a radar (RADAR), a laser range finder/LIDAR (or other distance measuring devices), an acoustic sensor, an ultrasound sensor, and a camera or an image capturing device. The sensor system 144 may include multiple sensors (e.g. oxygen (O₂) monitor, fuel gauge sensor, engine oil pressure sensor, and temperature, humidity, pressure sensors, etc.) for monitoring the vehicle 100. Other sensors may also be provided. One or more sensors included in the sensor system 144 may be individually driven or collectively driven to update the position or direction, or both of one or more sensors.

The IMU may include a combination of sensors (e.g. an accelerator and a gyroscope) for sensing positional and directional changes of the vehicle 100 based on inertial acceleration. The GPS transceiver may be any sensor used to estimate the geographic location of the vehicle 100. For this purpose, the GPS transceiver may include a receiver/transmitter to provide the position information of the vehicle 100 relative to the earth. It needs to be noted that GPS is one example of a global navigation satellite system, and therefore, in some embodiments, the GPS transceiver may be replaced with a BeiDou navigation satellite system transceiver or a Galileo satellite navigation system transceiver. The radar unit may use radio signals to sense an object in the environment of the vehicle 100. In some embodiments, in addition to sensing an object, the radar unit may also be used to sense the speed and heading of an object approaching the vehicle 100. The laser range finder or LIDAR unit (or other distance measuring devices) may be any sensor that uses a laser to sense an object in the environment of the vehicle 100. In one embodiment, the laser range finder/LIDAR unit may include a laser source, a laser scanner, and a detector. The laser range finder/LIDAR unit is used to operate in either a continuous (e.g. using heterodyne detection) or discontinuous detection mode. The camera may include a device for capturing multiple images of the environment in which the vehicle 100 is located. The camera may be a still image camera or a dynamic video camera.

The control system 146 is used to control the operation of the vehicle 100 and components (or units) thereof. Accordingly, the control system 146 may include various units, such as a steering unit, a power control unit, a braking unit, and a navigation unit.

The steering unit may be a combination of machines that adjust the forward direction of the vehicle 100. The power control unit (which may be, for example, an accelerator) may be used, for example, to control the operating speed of the engine and thus the speed of the vehicle 100. The braking unit may include a combination of machines for decelerating the vehicle 100. The brake unit can decelerate the vehicle with frictional force in a standard manner. In other embodiments, the braking unit may convert the kinetic energy of the wheel into electrical current. The brake unit may also take other forms. The navigation unit may be any system that determines a driving path or route for the vehicle 100. The navigation unit may also dynamically update the driving path during the travel of the vehicle 100. The control system 146 may additionally or alternatively include other components (or units) not shown or described.

The user interface system 148 may be used to allow the interaction between the vehicle 100 and external sensors, other vehicles, other computer systems, and/or a user of the vehicle 100. For example, the user interface system 148 may include a standard visual display device (e.g. a plasma display, a liquid crystal display (LCD), a touch screen display, a head-installed display, or other similar displays), a loudspeaker or other audio output devices, a microphone or other audio input devices. For example, the user interface system 148 may also include a navigation interface, and an interface that controls the internal environment (e.g. temperature, fans, etc.) of the vehicle 100.

The communication system 152 may provide a way for the vehicle 100 to communicate with one or more equipment or other surrounding vehicles. In one exemplary embodiment, the communication system 152 may communicate with one or more equipment directly or through a communication network. The communication system 152 may be, for example, a wireless communication system. For example, the communication system may use 3G cellular communication (e.g. CDMA, EVDO, GSM/GPRS) or 4G cellular communication (e.g. WiMAX or LTE), and may also use 5G cellular communication. Alternatively, the communication system may communicate with a wireless local area network (WLAN) (e.g. using WIFI). In some embodiments, the communication system 152 may communicate directly with one or more equipment or other surrounding vehicles, for example, by using infrared rays, Bluetooth, or ZIGBEE. Other wireless protocols, such as various vehicle-installed communication systems, are also within the scope of the present application. For example, the communication system may include one or more dedicated short-range communication (DSRC) devices, V2V devices, or V2X devices that communicate publicly or privately data with vehicles and/or roadside stations.

The computing system 150 can control some or all of the functions of the vehicle 100. The automatic driving control unit in the computing system 150 may be used to identify, evaluate, and avoid or overcome potential obstacles in the environment in which the vehicle 100 is located. In general, the automatic driving control unit may be used to control the vehicle 100 without a driver, or to provide assistance for the driver to control the vehicle. In some embodiments, the automatic driving control unit is configured to combine data from the GPS transceiver, radar data, LIDAR data, camera data, and data from other vehicle systems to determine a travel path or trajectory of the vehicle 100. The automatic driving control unit may be activated to enable the vehicle 100 to be driven in an automatic driving mode.

The computing system 150 may include at least one processor (which may include at least one microprocessor) that executes processing instructions (i.e. machine-executable instructions) stored in a non-volatile computer-readable medium (e.g., a data storage device or memory). The computing system 150 may also be multiple computing devices that distributedly control the components or system of vehicle 100. In some embodiments, the memory may contain processing instructions (e.g. program logic) that are executed by the processor to perform various functions of the vehicle 100. In one embodiment, the computing system 150 is capable of data communication with the drive system 142, the sensor system 144, the control system 146, the user interface system 148, and/or the communication system 152. An interface in the computing system is used to facilitate data communication between the computing system 150 and the drive system 142, the sensor system 144, the control system 146, the user interface system 148, and the communication system 152.

The memory may also include other instructions, including the instruction for data transmission, an instruction for data reception, an instruction for interaction, or an instruction for controlling the drive system 142, the sensor system 144, or the control system 146, or the user interface system 148.

In addition to storing processing instructions, the memory may store a variety of information or data, such as image processing parameter, road map, and path information. Such information may be used by the vehicle 100 and the computing system 150 during the operation of the vehicle 100 in an automatic, semi-automatic, and/or manual mode.

Although the automatic driving control unit is shown separate from the processor and the memory, it should be understood that in some implementation modes, some or all of the functions of the automatic driving control unit may be implemented with a program code instruction residing in one or more memories (or data storage devices) and executed by one or more processors, and that the automatic driving control unit may in some cases be implemented by using the same processor and/or memory (or data storage device). In some implementation modes, the automatic driving control unit may be implemented at least in part by using various dedicated circuit logics, various processors, various field programmable gate arrays ("FPGA"), various application-specific integrated circuits ("ASIC"), various real-time controllers and hardware.

The computing system 150 may control the function of the vehicle 100 according to inputs received from various vehicle systems (e.g. the drive system 142, the sensor system 144, and the control system 146) or input received from the user interface system 148. For example, the computing system 150 may use input from the control system 146 to control the steering unit to avoid an obstacle detected by the sensor system 144. In one embodiment, the computing system 150 may be used to control various aspects of the vehicle 100 and the system thereof.

Although Fig. 1 shows various components (or units) integrated into vehicle 100, one or more of these components (or units) may be installed on vehicle 100 or individually associated with vehicle 100. For example, the computing system may exist partially or completely independent from the vehicle 100. Therefore, the vehicle 100 can exist as a separate or integrated unit of the equipment. The equipment units constituting the vehicle 100 may communicate with each other by wire communication or wireless communication. In some embodiments, additional components or units may be added to each system or one or more of the above components or units may be removed from the system (e.g. the LiDAR or radar shown in Fig. 1).

In some embodiments, the vehicle 100 is a truck, further an autopilot truck. The truck includes a tractor 110 (also referred to as a headstock) and a trailer 120 (also referred to as a trailer). The tail of the tractor 110 is connected to the head of the trailer 120. Each of the systems 142-152 may be located on the tractor 110. Some of the sensors in the sensor system 144 and some of the communication system 152 may also be distributed on the trailer 120. When an autopilot truck is running, it is generally controlled by the tractor 110 to drive the trailer 120 to move. The trailer 120 may be loaded or unloaded with a container 130.

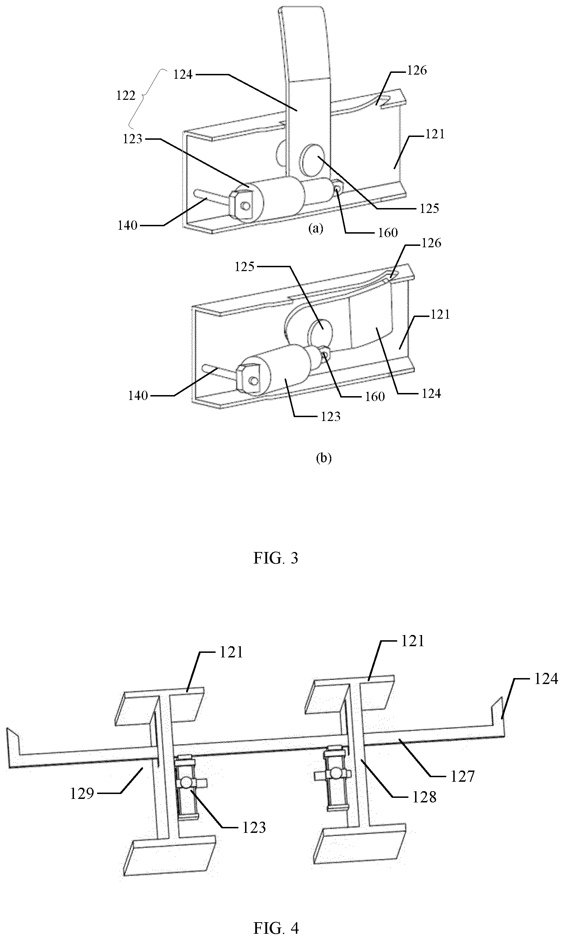

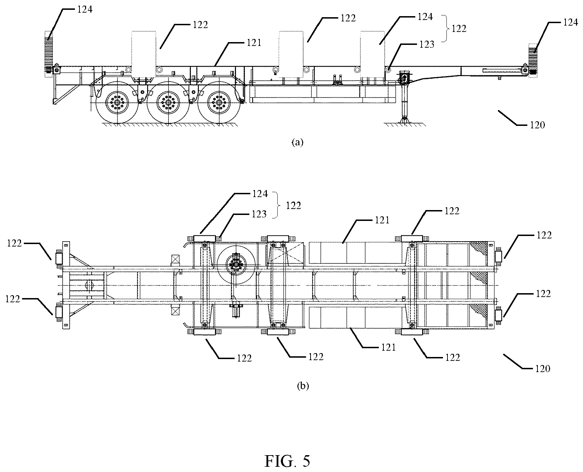

Fig. 2 is a schematic view, and in particular a side view, of a trailer 120 of one embodiment of the present disclosure. Fig. 5 is a schematic diagram of a trailer 120 according to another embodiment of the present disclosure. Figs. 3 and 4 are schematic structural views of a container protector 122 according to one embodiment of the present disclosure, respectively. Referring to Figs. 1-5, the trailer 120 includes a structural beam 121 and at least one container protector 122 installed on the structural beam 121. The container protector 122 comprises a drive member 123 and a protection member 124, wherein the drive member 123 has a telescopic function and is adapted to drive the protection member 124 to rise and lower (i.e., go up and down). The protection member 124 can provide a limiting effect on a container 130 (see Fig. 1) on the trailer 120 when the protection member 124 rises, and can release the limiting effect on the container 130 when the protection member 124 is lowered to a predetermined position. The predetermined position is, for example, a position where the height of the top surface of the protection member 124 is flush with the height of the bottom surface of the container 130. The bottom surface of the container 130 refers to a contact surface with the trailer 120 after the container 130 is loaded, or may be referred to as the upper surface of the trailer 120.

It needs to be noted that the drive member employed in Fig. 2 is installed on the inner side of the structural beam 121 and is shielded from a side view so that the structure of the drive member is temporarily not shown in Fig. 2. The drive member may also be installed on the outer side of the structural beam 121 (e.g. in the manner shown in Fig. 5) in a position that ensures that the protection member 124 can be driven up to provide a limiting function for the container 130, and the present disclosure does not particularly limit this.

Alternatively, a container installing area can be provided on the trailer 120, i.e. an area where a container is typically placed. The protection member 124 may be provided at a position adjacent to the peripheral boundary line of the container installing area so that the protection member 124 can lock the container 130 when raised. The protection member 124 may be provided within a predetermined distance from the peripheral boundary line of the container installing area. If the container installing area is a rectangular ABCD area, the protection member 124 may be provided next to the four sides AB, BC, CD, and DA. The container installing area may be divided empirically, or may be one fixed container installing position set in advance. Specifically, the protection member 124 may be provided on a structural beam closest to the boundary of the container installing area. Therefore, the structural beam 121 of the present disclosure may refer specifically to the structural beam near the outer-side boundary of the container installing area, or may refer specifically to the outermost one circle structural beam of the trailer. The structural beam 121 may be a short length of the transverse beam, or may be a short length of the longitudinal beam, which will not be limited by the present disclosure.

Further, the trailer 120 may be provided with multiple container protectors 122, such as at least one container protector 122 being respectively provided on each side, to provide limiting function for the container 130 from multiple directions. At this time, multiple protection members 124 in the multiple container protectors 122 are respectively provided at the boundary of the immediate surroundings of the container placing area. Of course, in order to ensure a certain tolerance space, the installation position of the protection member 124 can be appropriately moved to a certain position to the outside of the vehicle so as to ensure that each container protector 122 can provide a limiting function for the container 130 even if the container 130 is misaligned.

Fig. 3 provides a laterally driven container protector 122 of one embodiment of the present disclosure, including a device in an open state in (a) and a device in a retracted state in (b). As shown in Fig. 3, the container protector 122 may be installed on the inner side of the structural beam 121. In one implementation mode, the drive member 123 comprises a first cylinder arranged laterally, which is arranged on the inner side of the structural beam 121 and is hinged to the protection member 124. The first cylinder drives the protection member 124 to rise and lower by a lateral driving force. The drive member 123 is rotatably connected to the structural beam 121, for example, rotatable about a connecting shaft 140 fixed to the structural beam 121. In addition, one rotary shaft 125 can also be provided on the inner side of the structural beam 121, the protection member 124 can rotate around the rotary shaft 125, and the protection member 124 can also be provided on the inner side of the structural beam 121 via one rotary shaft; in this case, a first side (as shown on the left side of the protection member 124 in Fig. 3) of the protection member 124 is the structural beam 121, a second side (as shown on the right side of the protection member 124 in Fig. 3) can be connected to one push rod 160, and the push rod 160 is connected to the drive member 123, so that the drive member 123 pushes the push rod 160 and the protection member 124 can be caused to rotate around the rotary shaft 125 to achieve the lifting and lowering of the protection member 124.

In addition, the upper surface of the structural beam 121 is provided with a through slot 126, and the radian of the through slot 126 matches the lifting trajectory of the protection member 124. That is, the protection member 124 rises or lowers by the lateral driving force of the first cylinder, and the radian of the motion trail of the protection member 124 on the upper surface of the structural beam 121 just matches the through slot 126. Of course, the container protector 122 may also be installed on the outer side of the structural beam 121 as long as the installation position can lock the container. The structural beam 121 in the example of Fig. 3 has an internal cavity in which the drive member 123 is installed. Of course, the structural beam 121 may be a flat plate structure straight up and down, in which case the container protector 122 may be installed directly on the outer surface of the structural beam 121.

Fig. 4 provides an example of a vertically driven container protector of another embodiment of the present disclosure. The trailer 120 is further provided therein with a support beam 127 crossing the bottom of the trailer, the protection member 124 and the drive member 123 are both connected to the support beam 127, and the drive member 123 drives the support beam 127 to rise and lower by means of telescopic force so as to drive the protection member 124 to rise and lower. In some embodiments, the protection member 124 is secured above the support beam 127 and the drive member 123 is provided below the support beam 127. As the lowermost drive member 123 rises and lowers, it drives the middle support beam 127 to rise and lower, which in turn drives the uppermost protection member 124 to rise and lower.

Alternatively, the drive member 123 includes a second cylinder provided vertically for providing a vertical driving force to the support beam 127 and the protection member 124. In addition, it should be understood that the truck has multiple lateral and vertical structural beams that intersect to form multiple openings. The trailer further comprises at least one vertical beam on each side (such as left side and right side) of the trailer. The vertical beam has an opening or forms an opening with the lateral beam. Therefore, the support beams 127 may pass through openings 129 in the vertical beams 128 on two sides of the trailer 120. Furthermore, in a state where the trailer 120 is not installed with a container (which may be referred to as a non-operating state), the support beam 127 may be just placed on the cross beam serving as the bottom edge of the opening 129 (namely, the bottom edge of a rectangular opening, which may be referred to as a bottom edge cross beam, and is not shown in Fig. 4, and the structure is actually the lowest point of the vertical line where the opening 129 is located in Fig. 4). At the time, the bottom edge cross beam provides support for the support beam 127, and the height of the drive member 123 is lower than the height from the bottom edge cross beam to the ground so that the drive member 123 does not contact the ground in the non-operating state. Alternatively, the housing of the drive member 123 may be fixed to the vertical beam 128 so that only the drive rod portion conducts the rising and lowering movement in the operating state. In addition, the vertical length of the protection member 124 is less than or equal to the height from the bottom edge cross beam to the bottom surface of the container 130 (i.e. the contact surface of the container 130 with the trailer 120 after loading, or the upper surface of the trailer 120), ensuring that the protection member 124 does not exceed the bottom surface of the container in the non-operating state.

However, in an operating state, such as a rising operating state, the drive member 123 vertically drives the support beam 127 to rise, and thus drives the protection member 124 to also rise, thereby locking the container. In the lowering operating state, the drive member 123 vertically drives the support beam 127 to lower, and thus drives the protection member 124 to also lower, thereby releasing the limiting function for the container 130.

Fig. 5 provides a trailer 120 according to yet another embodiment of the present disclosure, wherein (a) is a side view and (b) is a top view. The trailer 120 has multiple container protectors 122 that are vertically driven by a gear. The drive member 123 comprises a gear structure and the protection member 124 correspondingly comprises a prismatic structure (not shown in Fig. 5) matching the gear structure. In the non-operating state, the protection member 124 is located below the bottom surface of the container 130; in the rising operating state, the gear structure drives the protection member 124 to rise to the highest position by rotating; in the lowering operating state, the gear structure rotates to drive the protection member 124 to lower to a height not higher than the bottom surface of the container.

Alternatively, the container protector 122 may be installed on the outer side of the structural beam 121, such as on the outer side of the outermost side beam of the trailer. In addition, one handle ring (not shown in Fig. 5) may be provided on the outer side of the structural beam 121, and the gear structure and the protection member are limited in the handle ring. In addition, each drive member 123 may include one to multiple gear structures, enabling one gear to drive one protection member 124 or multiple gears to drive one protection member. For example, each drive member 123 may include left and right gear structures sharing one protection member 124 therebetween for driving the protection member 124 up and down.

In some embodiments, the container protector 122 can communicate with a remote-control device and may enter a rising operating state or a lowering operating state in response to a remote-control instruction. The staff can click a button of the remote controller or click a mouse to button start the container protector 122 and make the same enter the operating state. For example, the drive member 123 drives the protection member 124 to move upward in response to the upward operation of the remote control and it automatically stops after moving to the first predetermined position; in response to the downward operation of the remote control, the protection member 124 is driven to move downwards and automatically stops after moving to the second predetermined position. The first predetermined position may be the highest position that the protection member 124 can reach under the current driving conditions, and the second predetermined position may be a position no higher than the bottom surface of the hanging box. In another embodiment, the container protector 122 can communicate with the computing system 150 and may enter a rising operating state or a lowering operating state in response to local-control instruction sent by the computing system 150. The computing system 150 sends the local-control instruction to the container protector 122 in response to determining that the vehicle has reached its destination and has come to a stop. Both of the remote-control instruction and the local-control instruction comprises a rising instruction and a lowing instruction. For example, the computing system 150 sends a rising/ upward instruction to the container protector 122 in response to determining that the vehicle is located at a predetermined loading area and has been loaded with a container, or in response to determining that the vehicle has finished a loading task. The computing system 150 sends a lowering/downward instruction to the container protector 122 in response to determining that the vehicle is loaded with a container and has reached its destination and has come to a stop, or in response to determining that the vehicle is loaded with a container and has parked at predetermined unloading area, or in response to determining that the vehicle is about to start executing an unloading task. The predetermined loading area and the predetermined unloading area of the container of the vehicle are pre-stored in the computing system 150 or pre-sent to the computing system 150 along with the driving task. Besides, a dispatching system can send an instruction to the computing system 150 indicating the container is loaded or the container is to be unloaded.

In some embodiments, the protection member 124 may be a flat plate structure that is straight up and down, or may be curved, such as curving from bottom to top in the direction out of the vehicle, so as to more closely follow the changing curve of the container.

According to the technical solution of the present disclosure, an intelligent container loading and unloading solution is provided. After loading a hanging box, a protection member can be raised to a position capable of providing a limiting function for the hanging box; before unloading the hanging box, the protection member can be lowered to a position no higher than the bottom surface of the container in order to release the limiting function for the container. This eliminates the need for personnel to specifically walk to the trailer location to tighten or loosen the shackle, allowing for remote automated control of cargo loading and unloading.

Those skilled in the art should understand that the above are only preferred embodiments of the present disclosure, and the scope of the present disclosure is not limited thereto. Obviously, those skilled in the art can make various changes and variations to the application without departing from the scope of the present application. In this way, if these modifications and variations of the present application lower within the scope of the claims of the present application and their equivalent technologies, the present application is also intended to include these changes and variations.

## Claims

1. A trailer, comprising:
a structural beam; and
at least one container protector installed on the structural beam;
wherein the container protector comprises a drive member and a protection member, the drive member being adapted to drive the protection member to rise and lower, and the protection member being capable of providing a limiting function for a container on the trailer when raised.

2. The trailer according to claim 1, wherein the container protector is installed on an inner side of the structural beam, an upper surface of the structural beam is provided with a through slot, and a radian of the through slot matches a lifting trajectory of the protection member.

3. The trailer according to claim 1 or 2, wherein the drive member comprises a laterally provided first cylinder provided on the inner side of the structural beam, the protection member being hinged to the first cylinder.

4. The trailer according to any one of claims 1-3, further comprises:
a connecting shaft provided on the structural beam, wherein the drive member is operable to rotate about the connecting shaft.

5. The trailer according to any one of claims 1-4, further comprises:
a rotary shaft provided on the inner side of the structural beam; and
a push rod whose two sides are connected to the drive member and the protection member respectively;
wherein the drive member is operable to push the push rod, to cause the protection member to rotate around the rotary shaft.

6. The trailer according to any one of claims 1-5, further comprising a support beam traversing a bottom of the trailer, wherein the protection member and the drive member are provided on the support beam, and the drive member drives the protection member to rise and lower by driving the support beam to rise and lower.

7. The trailer according to claim 6, wherein the drive member comprises a second cylinder provided vertically, the trailer further comprises at least one vertical beam on each side of the trailer, the vertical beam has an opening, and the support beam passing through the opening of the vertical beam.

8. The trailer according to any one of claims 1-7, wherein the container protector is installed on an outer side of the structural beam, the drive member comprises a gear structure, and the protection member comprises a prismatic structure that matches the gear structure.

9. The trailer according to claim 8, wherein the drive member comprises two gear structures that lock one protection member therebetween.

10. The trailer according to any one of claims 1-9, wherein the protection member is operable to lower to a position no higher than a bottom surface of the container so as to release the limiting function for the container.

11. The trailer according to claim 10, wherein a container placing area is provided on the trailer, the at least one container protector is multiple container protectors, and multiple protection members in the multiple container protectors are respectively provided adjacent to a peripheral boundary of the container placing area.

12. The trailer according to any one of claims 1-11, wherein the container protector is configured to rise and lower in response to a remote-control instruction generated by a push-button operation or a mouse click operation.

13. The trailer according to any one of claims 1-12, wherein the trailer is a component of a vehicle and configured to rise and lower in response to a local-control instruction sent from a computing device in the vehicle.

14. The trailer according to claim 13, wherein the computing device is configured to:
send a rising instruction to the container protector in response to determining that the vehicle has finished a loading task; and
send a lowering instruction to the container protector in response to determining that the vehicle is about to start executing an unloading task.

15. A vehicle, comprising:
a tractor; and
a trailer according to any one of claims 1 to 14.
